# EUROPEAN PATENT APPLICATION

(11) **EP 4 478 485 A1**
(43) Date of publication of application: **18.12.2024**
(21) Application number: 23816413.1
(22) Date of filing: 02.06.2023
(51) Int. Cl.: H01M 10/627, H01M 10/6563, H01M 10/6566, H01M 10/613, H01M 10/663, H01M 50/251

(54) **BATTERY RACK INCLUDING IMPROVED COOLING STRUCTURE**

(30) Priority: 03.06.2022 KR 20220068541
(71) Applicant: LG Energy Solution, Ltd., Seoul 07335 (KR)
(72) Inventor: PARK, Jung-Beom, Daejeon 34122 (KR); CHOI, Byung-Hyuk, Daejeon 34122 (KR); LEE, Seung-Jun, Daejeon 34122 (KR); CHO, Tae-Shin, Daejeon 34122 (KR); MUN, Jeong-O, Daejeon 34122 (KR)
(74) Representative: Plasseraud IP
(86) International application number: PCT/KR2023/007651
(87) International publication number: WO 2023/234754

(57) **Abstract**

Disclosed is a battery rack capable of efficiently securing cooling performance and improving safety. The battery rack includes a plurality of battery modules stacked in at least one direction; a supply unit configured to supply a cooling gas; an inlet duct unit having one end connected to the supply unit and configured to guide the flow of the cooling gas supplied by the supply unit; and a distribution unit connected to the other end of the inlet duct unit and configured to distribute the cooling gas guided by the inlet duct unit to each of the plurality of battery modules.

## Description

### TECHNICAL FIELD

The present application claims priority to Korean Patent Application No. 10-2022-0068541 filed on June 3, 2022 in the Republic of Korea, the disclosures of which are incorporated herein by reference.

The present disclosure relates to a battery, and more specifically, to a technology for cooling and safety improvement of a battery rack and a battery container including the battery rack.

### BACKGROUND ART

Recently, as issues such as power shortage or eco-friendly energy have emerged, an energy storage system (ESS) for storing generated power has been attracting much attention. Representatively, when such an ESS is used, it is easy to construct a power management system such as a smart grid system, and it is possible to easily control power supply and demand in a specific region or city. In addition, as commercialization of electric vehicles is in full swing, such an ESS can be applied to electric charging stations capable of charging electric vehicles.

The ESS may be configured in various forms, but may be typically configured to include at least one battery container. The battery container used in the ESS may typically include a large number of battery modules to secure a large charging and discharging capacity. Here, the plurality of battery modules may be grouped into a certain unit and then included inside a container housing in consideration of various aspects such as management and loading. In particular, inside the container housing, a plurality of battery modules are stacked vertically to form a group, and this group may be expressed as a battery rack. At this time, the plurality of battery modules included in the battery rack may maintained their stacked state through a rack frame or a separate fixing structure. Also, inside the container housing, a number of battery racks may be included in a horizontal direction. In other words, the battery container may include a plurality of battery racks.

In this way, a battery device such as a battery rack and a battery container may include a plurality of battery modules. At this time, in order to stably secure the performance of each battery module, the air condition inside or outside the battery module needs to be maintained within certain conditions. In particular, when a plurality of battery modules are densely packed in a battery rack or a battery container, the surrounding temperature of the battery modules may rise excessively. In addition, this increase in temperature may not only cause a deterioration in the performance of the battery module, but also pose a serious threat to safety due to the occurrence of thermal runaway. Therefore, when the surrounding temperature of the battery modules included in the battery rack or the battery container increases, it is necessary to cool the temperature appropriately.

In the case of a conventional battery rack or battery container, in order to cool a plurality of battery modules, a cooling component such as a fan is sometimes installed separately on each battery module. However, in this case, the number of fans and the wiring of connecting cables to connect the fans increases. Therefore, the material cost increases, the internal configuration of the container becomes complicated, installation of each component becomes difficult, and there are disadvantages in many aspects such as after-sales service (A/S).

### DISCLOSURE

### Technical Problem

The present disclosure is designed to solve the problems of the related art, and therefore the present disclosure is directed to providing a battery rack, which may efficiently secure cooling performance and improve safety, and a battery container and an energy storage system including the battery rack.

However, the technical problem to be solved by the present disclosure is not limited to the above, and other problems not mentioned herein will be clearly understood by those skilled in the art from the following disclosure.

### Technical Solution

In one aspect of the present disclosure, there is provided a battery rack, comprising: a plurality of battery modules stacked in at least one direction; a supply unit configured to supply a cooling gas; an inlet duct unit having one end connected to the supply unit and configured to guide the flow of the cooling gas supplied by the supply unit; and a distribution unit connected to the other end of the inlet duct unit and configured to distribute the cooling gas guided by the inlet duct unit to each of the plurality of battery modules.

Here, the inlet duct unit may have a fan.

In addition, the inlet duct unit may be located at an upper portion of the plurality of battery modules.

In addition, the distribution unit may have a plurality of distribution output holes formed to respectively correspond to the plurality of battery modules.

In addition, at least some of the plurality of distribution output holes may be configured to have different aperture ratios.

In addition, the plurality of battery modules may have a module input hole formed to allow the cooling gas to flow into an inner space.

In addition, the distribution unit may have a discharge portion configured to discharge gas or flame discharged from the plurality of battery modules to the outside.

In addition, the discharge portion may be configured to be opened when a pressure of a predetermined level or above is applied.

In addition, the inlet duct unit may include two or more unit inlet ducts configured to be detachably attached to each other.

In addition, at least one of the two or more unit inlet ducts may include a corrugated pipe.

In addition, the two or more unit inlet ducts may be configured to be detachable by a magnetic force.

In addition, the battery rack may further comprise an outlet duct unit configured to deliver a cooling gas discharged from the plurality of battery modules to the supply unit.

In addition, the outlet duct unit may include two or more unit outlet ducts configured to be detachably attached to each other.

In another aspect of the present disclosure, there is also provided a battery container, comprising the battery according to the present disclosure.

In still another aspect of the present disclosure, there is also provided an energy storage system, comprising the battery according to the present disclosure.

### Advantageous Effects

According to the present disclosure, the cooling performance of the battery rack or battery container may be efficiently secured.

In particular, according to one embodiment of the present disclosure, when a plurality of battery modules are included inside a battery rack or a battery container, a corresponding fan may not be installed for each battery module. For example, with only one fan per battery rack containing a plurality of battery modules, the cooling performance of all battery modules included in the battery rack may be stably secured.

In addition, according to one embodiment of the present disclosure, waste of cooling airflow is minimized, and cooling gas may be efficiently delivered to the battery module.

Therefore, according to this embodiment of the present disclosure, the lifespan of battery modules, as well as a battery rack, a battery container, an energy storage system, or the like including the battery modules may be stably secured.

In addition, according to this embodiment of the present disclosure, the manufacturing cost of the battery container may be reduced, cost competitiveness is improved, and due to the simple structure, it is possible to improve the convenience of assembly, installation, or management for manufacturers or business operators.

Also, according to one embodiment of the present disclosure, an effective container-integrated air-conditioning structure may be implemented. In particular, for a battery rack or a battery container that does not include a rack frame for accommodating and stacking a plurality of battery modules or simply includes a rack frame, the rack unit air-conditioning configuration may be more easily implemented.

In addition, according to one embodiment of the present disclosure, the safety of the battery rack, the battery container, the energy storage system, or the like may be improved.

In particular, by effectively cooling the battery modules, it is possible to prevent situations such as thermal runaway, explosion, or fire. Moreover, when an emergency situation such as thermal runaway occurs in a specific battery module, the propagation of gas or flame between battery modules is suppressed, thereby improving the safety of the battery rack, the battery container, or the like.

Also, according to one embodiment of the present disclosure, the energy density of the battery rack, the battery container, or the like may be improved. In particular, according to one embodiment of the present disclosure, the front and rear air-conditioning space of the battery container may be reduced.

In addition, several other additional effects may be achieved by various embodiments of the present disclosure. Various effects of the present disclosure will be described in detail in each embodiment, or the effects that can be easily understood by those skilled in the art will be not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a battery rack according to an embodiment of the present disclosure.
FIG. 2 is a rear perspective view schematically showing the battery rack according to an embodiment of the present disclosure.
FIG. 3 is a perspective view showing some components of the battery rack according to an embodiment of the present disclosure separately.
FIG. 4 is an enlarged view of the overall configuration and partial portions of a distribution unit according to an embodiment of the present disclosure.
FIG. 5 is a diagram showing a plurality of stacked battery modules according to an embodiment of the present disclosure.
FIG. 6 is an enlarged view showing the portion A1 in FIG. 5.
FIG. 7 is a perspective view schematically showing a battery rack according to another embodiment of the present disclosure.
FIG. 8 is a cross-sectional view, taken along the line A2-A2' in FIG. 7.
FIG. 9 is an enlarged cross-sectional view schematically showing some components of the distribution unit included in a battery rack according to still another embodiment of the present disclosure.
FIG. 10 is an enlarged cross-sectional view schematically showing some components of the distribution unit included in a battery rack according to still another embodiment of the present disclosure.
FIG. 11 is an exploded perspective view schematically showing an inlet duct unit according to an embodiment of the present disclosure.
FIG. 12 is a perspective view schematically showing an outlet duct unit included in the battery rack according to an embodiment of the present disclosure.
FIG. 13 is a perspective view schematically showing some components of the battery rack according to an embodiment of the present disclosure.
FIG. 14 is a diagram showing the flow of a cooling gas in the battery rack according to an embodiment of the present disclosure.
FIG. 15 is an exploded perspective view showing the outlet duct unit according to an embodiment of the present disclosure.
FIG. 16 is a perspective view schematically showing a battery container according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of explanation, and it is obvious to those skilled in the art that these terms may vary depending the location of the a object or the location of an observer.

Also, in this specification, terms indicating directions such as "inner" or "outer" may be used, but unless otherwise specified, the term "inner" may refer to a direction toward the center of a battery rack or each component, and the term "outer" may refer to an opposite direction.

In addition, this specification includes various embodiments, but features identical or similar to those of other embodiments will not be described in detail, and different features will be described in detail in each embodiment.

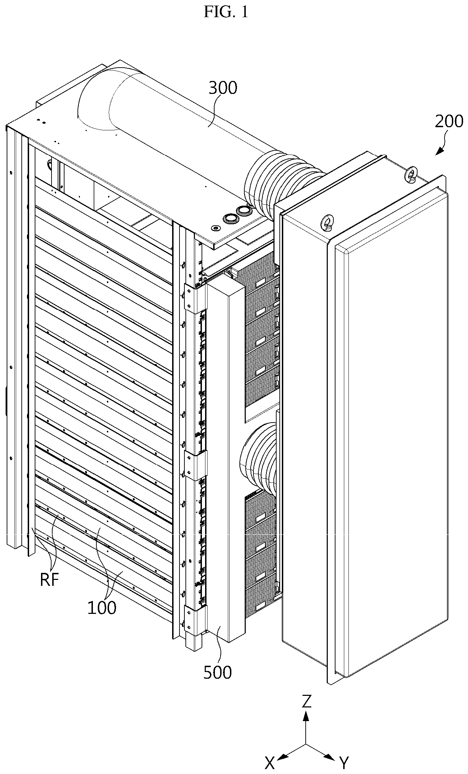

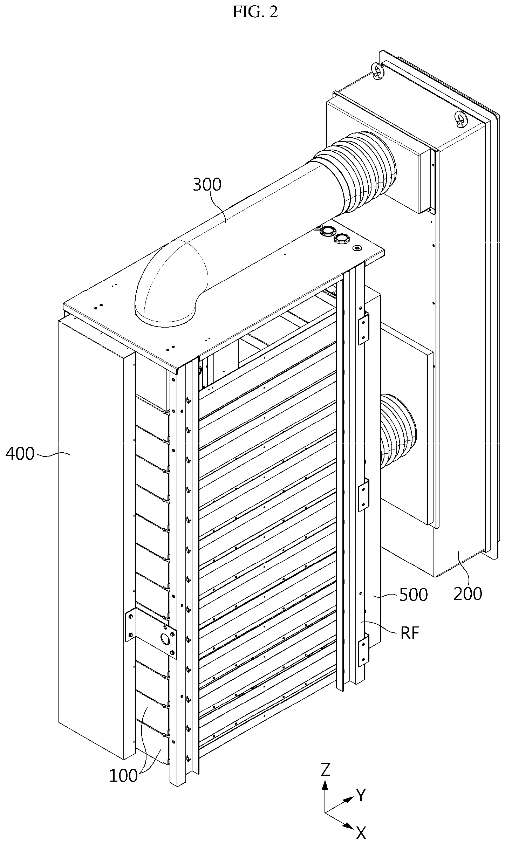

FIG. 1 is a perspective view schematically showing a battery rack according to an embodiment of the present disclosure. FIG. 2 is a rear perspective view schematically showing the battery rack according to an embodiment of the present disclosure.

Referring to FIGS. 1 and 2, the battery rack according to the present disclosure includes a battery module 100, a supply unit 200, an inlet duct unit 300, and a distribution unit 400.

A plurality of battery modules 100 may be included in a battery rack. The plurality of battery modules 100 may be electrically connected to each other. In particular, the plurality of battery modules 100 may be connected in parallel and/or series to increase capacity and/or output. At this time, the plurality of battery modules 100 may be connected to each other through a bus bar, a cable, or the like.

The plurality of battery modules 100 may be stacked in at least one direction. In particular, the plurality of battery modules 100 may be stacked in the upper and lower directions, as shown in the drawing. Moreover, the battery rack according to the present disclosure may include a rack frame, as indicated by RF in FIGS. 1 and 2, in order to more stably maintain the stacked state of the plurality of battery modules 100. Alternatively, the plurality of battery modules 100 may be directly seated in a container housing or the like included in a battery container, rather than in a battery rack, to maintain the stacked state. In this case, the battery container may be called a rackless container in the sense that there is no rack frame in the battery rack to maintain the stacked state of the battery modules 100.

Each of the plurality of battery modules 100 may include a plurality of battery cells and a module case for accommodating the cells. At this time, the battery cell refers to one secondary battery and may be a pouch-type battery or a can-type battery. The present disclosure is not limited to the specific structure, form, or type of the battery module 100, and various battery modules 100 known at the time of filing of this application may be employed in the present disclosure.

The battery module 100 may also be referred to as a battery pack. In particular, each battery module 100 may include a control module such as a BMS (Battery Management System), and in this case, the battery module 100 may be a battery pack.

The supply unit 200 may be configured to supply a cooling gas. In particular, the supply unit 200 may supply gas with a temperature lower than that of the surrounding area as a cooling medium. At this time, the supply unit 200 may generate and supply a cooling medium by sucking in and cooling the surrounding air. Alternatively, the supply unit 200 may receive and supply a cooling gas from another external unit.

For example, the supply unit 200 may include an air conditioning equipment such as HVAC (Heating, Ventilation, Air Conditioning), or may be implemented using the same. The HVAC may be configured to circulate air within a space provided within the battery rack, such as the battery container. Moreover, the HVAC may be configured to include a condenser, an evaporator, and the like to circulate an internal air, absorb heat from the internal air, and discharge the heat to the outside of the battery container. In addition, the HVAC may cool the air inside the battery container by supplying the heat-absorbed and cooled gas to the inner space of the battery container. Here, the HVAC may absorb only heat from the internal air and discharge the absorbed heat to the outside, without discharging the internal air to the outside of the battery container.

One end of the inlet duct unit 300 may be connected to the supply unit 200. In addition, the inlet duct unit 300 may be configured to receive the cooling gas from the supply unit 200 and guide the flow of the supplied cooling gas. That is, the inlet duct unit 300 may receive the cooled gas from the supply unit 200 and provide a flow path through which the supplied gas may flow.

For example, in the embodiment of FIG. 1, the front (+Y-axis direction) end of the inlet duct unit 300 may be connected to the supply unit 200. In addition, the inlet duct unit 300 is elongated in the front and rear direction, and a hollow may be formed therein. Also, the hollow is open at both ends, and one end, for example the right end, may be connected to the supply unit 200. Accordingly, the cooling gas supplied by the supply unit 200 may flow along the extension direction of the hollow inside the inlet duct unit 300.

As a more specific example, the inlet duct unit 300 may be configured in the form of a cylindrical pipe elongated in the front and rear direction. However, the present disclosure is not limited to the specific shape of the inlet duct unit 300.

The distribution unit 400 may be connected to the other end of the inlet duct unit 300. In addition, the distribution unit 400 may be configured to distribute the cooling gas guided by the inlet duct unit 300 to each of the plurality of battery modules 100. For example, if the front end of the inlet duct unit 300 extending in the front and rear direction is connected to the supply unit 200, the distribution unit 400 may be connected to the rear end of the inlet duct unit 300. In addition, the cooling gas moving from the front side to the rear side inside the inlet duct unit 300 may flow into the distribution unit 400 and be divided and supplied to each of the plurality of battery modules 100.

In particular, the distribution unit 400 may be configured to be elongated along the stacking direction of the battery module 100. In particular, when a plurality of battery modules 100 are stacked in the upper and lower direction in the battery rack, the distribution unit 400 may have a shape elongated in the upper and lower direction, as shown in FIG. 2.

The distribution unit 400 may have a hollow formed therein to allow the cooling gas to flow. In particular, the hollow of the distribution unit 400 may have a shape elongated along the direction in which the distribution unit 400 extends. For example, in the embodiment of FIG. 2, the hollow of the distribution unit 400 may be configured to be elongated in the upper and lower direction.

The distribution unit 400 is disposed at one side of the battery module 100 and may divide and supply the cooling gas to the battery modules 100. For example, the distribution unit 400 may be located at the rear side of the module stack to supply the cooling gas to the rear side of each battery module 100.

According to an embodiment of the present disclosure, the cooling performance may be stably secured for the battery rack. In particular, in the process of supplying the cooling gas generated from the supply unit 200 to the battery module 100, the gas flow is guided by the inlet duct unit 300 and the distribution unit 400, so that the discarded cooling air current or the cooling gas supply distance may be minimized..

In addition, by ensuring stable cooling performance, it is possible to improve the performance, lifespan, and safety of the battery rack, or an application device including the battery rack, such as a battery container or an energy storage system.

Also, in the battery container or the energy storage system including a plurality of battery racks according to the present disclosure, a rack unit air-conditioning module may be easily implemented. In addition, in this aspect, when preparing a battery container or an energy storage system including a large number of battery racks according to the present disclosure, manufacturing and installation may be performed simply.

Moreover, according to an embodiment of the present disclosure, the front or rear space of the battery module 100 for cooling the battery module 100 may be reduced. Therefore, it may be advantageous to improve the energy density of the battery rack or application devices including the battery rack.

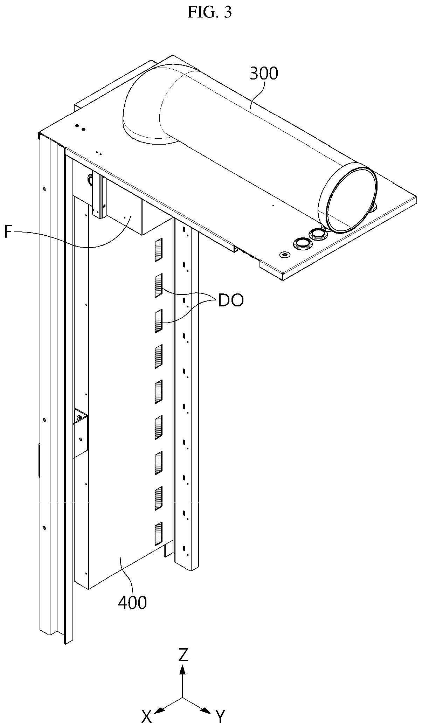

FIG. 3 is a perspective view showing some components of the battery rack according to an embodiment of the present disclosure separately. In particular, FIG. 3 shows the inlet duct unit 300 and the distribution unit 400.

Referring to FIG. 3, the inlet duct unit 300 may have a fan (fan) as indicated by F. The fan may control the flow direction or speed of the cooling gas flowing through the inlet duct unit 300. In particular, the fan may increase the flow speed of the cooling gas supplied from the supply unit 200 to the inner space of the inlet duct unit 300.

The fan may be installed at one side of the inlet duct unit 300. For example, the fan may be located at an end of the inlet duct unit 300 and connected to the distribution unit 400. In this case, the fan may suck in the cooling gas flowing in the inner space of the inlet duct unit 300 and discharge the cooling gas to the distribution unit 400.

In this embodiment, the fan does not need to be provided to each battery module 100. In particular, in the conventional art, in many cases, a fan is provided to each battery module 100 included in the battery rack, but in the present disclosure, the fan provided to the inlet duct unit 300 may be used to accelerate the flow of the cooling gas and smoothly supply the cooling gas to each battery module 100. Therefore, there is no need to provide a fan to each battery module 100. Moreover, only one fan may be provided in the inlet duct unit 300.

According to this embodiment of the present disclosure, the structure of the battery rack may be simplified and the cost competitiveness of battery module 100 may be improved. Also, in this case, the energy density of the battery module 100 or the battery rack may be improved. In addition, according to this embodiment, wiring or power for operating and controlling several fans may be reduced, so the battery module 100 may be installed easily and have a simpler structure.

The inlet duct unit 300 may be located at the upper portion of the plurality of battery modules 100, as shown in FIGS. 1 and 2. In this case, the inlet duct unit 300 may supply the cooling gas from the top to the bottom with respect to the entire battery modules 100. Moreover, if the inlet duct unit 300 has a fan, the fan may also be located at the upper portion of the battery module 100.

According to this embodiment of the present disclosure, the cooling gas may be supplied to the battery module 100 more smoothly. In particular, since the cooling gas supplied by the supply unit 200 has a low temperature, the cooling gas may flow more smoothly when supplied from the top to the bottom. Therefore, in this embodiment, since the cooling gas is smoothly supplied to all of the plurality of battery modules 100 stacked in the upper and lower direction, the cooling performance for each battery module may be stably secured.

In the distribution unit 400, a distribution output hole may be formed, as indicated by DO in FIG. 3. The distribution output hole DO is an opening formed so that the cooling gas flowing in the hollow of the distribution unit 400 may flow out to the battery module 100. A plurality of distribution output holes DO may be formed in the distribution unit 400.

The distribution output hole DO may be configured to correspond to each of the plurality of battery modules 100. In particular, the distribution output hole DO may be prepared to have a location and shape corresponding to the location and shape of the plurality of battery modules 100. For example, if the plurality of battery modules 100 are stacked in the upper and lower direction, the plurality of distribution output holes DO may be arranged in the upper and lower direction according to the stacking pattern of the battery modules 100.

Here, the plurality of distribution output holes DO may be arranged to correspond in one-to-one relationship to the plurality of battery modules 100. For example, if the battery rack includes twelve battery modules 100 stacked in the upper and lower direction, twelve distribution output holes DO may be formed in the distribution unit 400 in the upper and lower direction. At this time, the interval between the plurality of distribution output holes DO in the upper and lower direction may correspond to the interval of the battery modules 100 in the upper and lower direction.

According to this embodiment of the present disclosure, the cooling gas may be stably supplied to each battery module 100. Accordingly, cooling performance may be secured more effectively for all battery modules 100 included in the battery rack.

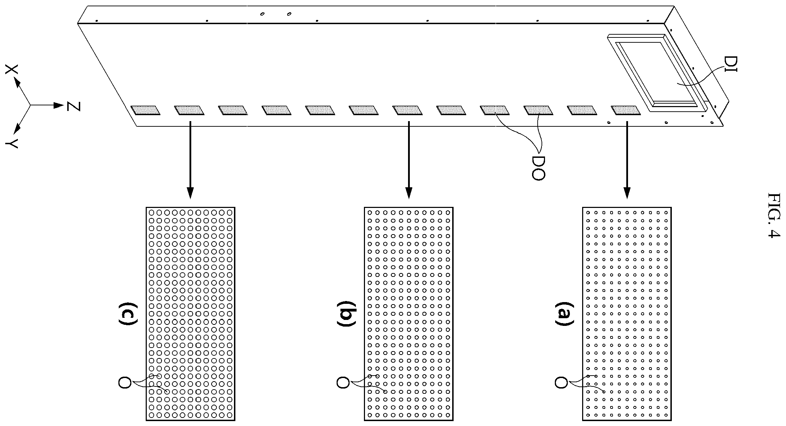

FIG. 4 is an enlarged view of the overall configuration and partial portions of a distribution unit 400 according to an embodiment of the present disclosure.

In FIG. 4, an enlarged form of some distribution output holes DO among the plurality of distribution output holes DO included in the distribution unit 400 are shown along with the overall configuration of the distribution unit 400. Referring to FIG. 4, a distribution input hole may be formed at an upper side of the distribution unit 400, as indicated by DI. The distribution input hole DI may be coupled to one end of the inlet duct unit 300, for example a rear end of the inlet duct unit 300. Therefore, the cooling gas delivered from the inlet duct unit 300 may flow into the hollow inside the distribution unit 400 through the distribution input hole DI. Also, only one distribution input hole DI may be formed in the distribution unit 400.

The cooling gas flowing into the hollow inside the distribution unit 400 through the distribution input hole DI may be distributed to each battery module 100 through the plurality of distribution output holes DO arranged to be spaced apart in the upper and lower direction. At this time, at least some of the plurality of distribution output holes DO may have different aperture ratios. In other words, the aperture ratio may be differentially applied to all or some of the plurality of distribution output holes DO. In particular, when the plurality of distribution output holes DO are arranged in the upper and lower direction, the distribution output hole DO located at the bottom may have a larger aperture ratio than the distribution output hole DO located at the top.

Referring to FIG. 4, (a) is an enlarged view showing the distribution output hole DO located at the uppermost side, (b) is an enlarged view showing one of the distribution output holes DO located at the center, and (c) is an enlarged view showing the distribution output hole DO located at the lowermost side. In each distribution output hole DO, a plurality of holes may be formed, as indicated by O. Each hole O is formed to penetrate the distribution unit 400 from the inside to the outside to open the hollow to the outside.

At this time, when comparing the enlarged view of the upper distribution output hole DO indicated by (a) with the enlarged view of the center distribution output hole DO indicated by (b), it may be found that the aperture ratio of the upper distribution output hole DO is smaller than the aperture ratio of the center distribution output hole DO. Also, when comparing the enlarged view of the center distribution output hole DO shown in (b) with the enlarged view of the lower distribution output hole DO shown in (c), it may be found that the aperture ratio of the center distribution output hole DO is smaller than the aperture ratio of the lower distribution output hole DO. In this case, it may be regarded that the aperture ratio of the lower distribution output hole DO is larger than the aperture ratio of the upper distribution output hole DO.

For example, the upper distribution output hole DO shown in (a) may be configured to have an aperture ratio of 10% to 30%, for example 16%. Also, the center distribution output hole DO shown in (b) may be configured to have an aperture ratio of 50% to 70%, for example 68%. Also, the center distribution output hole DO shown in (c) may be configured to have an aperture ratio of 80% to 100%, for example 85%.

The aperture ratio of the distribution output holes DO may be differentially applied by changing the size of the holes O in each distribution output hole DO, as shown in FIG. 4. As another example, the aperture ratio of the distribution output holes DO may be differentially applied by changing the number of holes O in each distribution output hole DO.

Moreover, the aperture ratio may be differentially applied to all distribution output holes DO arranged in the upper and lower direction. In this case, the aperture ratios of the distribution output holes DO may be configured to gradually increase from the top to the bottom.

According to this embodiment of the present disclosure, for the plurality of battery modules 100, the cooling performance deviation depending on the distance from the inlet duct unit 300 may be eliminated or minimized. For example, in the plurality of battery modules 100 stacked in the upper and lower direction, the cooling gas may be supplied to the inlet duct unit 300 located at the upper side first, and the cooling gas may be sufficiently supplied to the battery module 100 located at the lower side through the distribution output hole DO having a relatively high aperture ratio. Accordingly, it is possible to prevent a difference in cooling flow rate from occurring between the battery modules 100 depending on the distance from the inlet duct unit 300. In other words, the cooling performance may be ensured uniformly for the battery modules 100 stacked in the upper and lower direction.

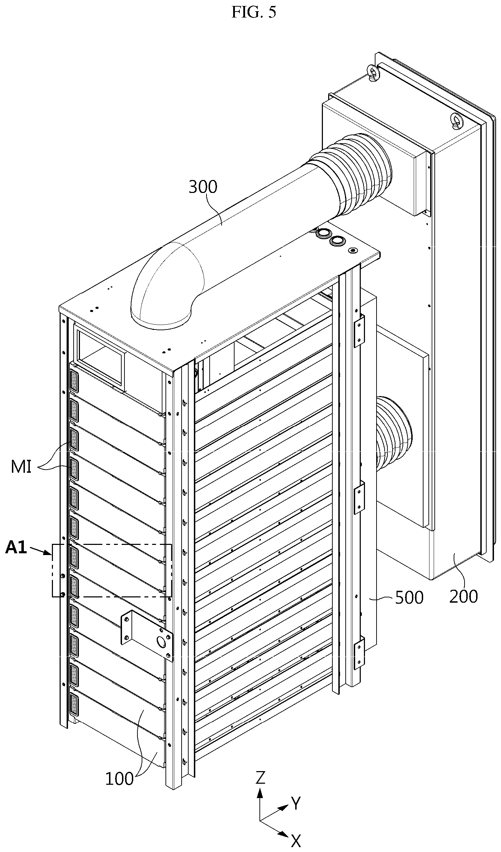

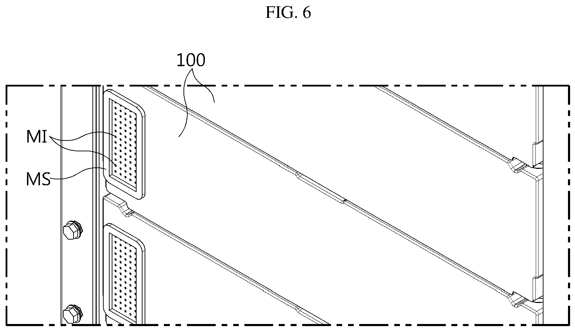

The plurality of battery modules 100 may have a module input hole. This will be described in more detail with further reference to FIGS. 5 and 6.

FIG. 5 is a diagram showing a plurality of stacked battery modules 100 according to an embodiment of the present disclosure. FIG. 6 is an enlarged view showing the portion A1 in FIG. 5.

Referring to FIGS. 5 and 6, the plurality of battery modules 100 are stacked in the upper and lower direction, and a module input hole may be formed at one side of each battery module 100, as indicated by MI. In particular, if the -Y-axis direction in the drawing is a rear direction, the module input hole MI may be formed at the rear side of the plurality of battery modules 100. The module input hole MI may be configured to penetrate between the inner space and the outer space at each battery module 100. A plurality of battery cells may be accommodated in the inner space of the battery module 100 so that the charging and discharging process may be repeated, and a lot of heat may be generated during this process. At this time, the module input hole MI may increase the cooling performance of the battery cell by allowing the cooling gas to be directly supplied to the battery cell located in the inner space of the battery module 100. The module input hole MI may be formed in a location and shape corresponding to the distribution output hole DO of the distribution unit 400.

In particular, the module input hole MI may be configured in the form where a plurality of holes are formed in one battery module 100, as shown in FIG. 6. In this case, it is possible to prevent foreign substances from entering the inner space of the battery module 100 through the module input hole MI. Also, in this case, if an emergency situation such as thermal runaway occurs inside the battery module 100, it is possible to prevent flame, electrode, active material, or the like from being discharged to the outside.

In the battery module 100, a sealing portion may be formed around the module input hole MI, as indicated by MS in the drawing. The sealing portion MS may be interposed between the distribution output hole of the distribution unit 400 and the module input hole MI of the battery module 100, and may be formed in a ring shape to surround the periphery of the module input hole MI. For example, the sealing portion MS may be formed in a rectangular ring shape to surround a plurality of holes forming the module input hole MI. The sealing portion MS may be made of an elastic material such as rubber or polyurethane.

According to this embodiment of the present disclosure, the cooling gas may be stably supplied from the distribution unit 400 to the inside of the battery module 100, and leakage of the inflow cooling gas may be prevented, thereby ensuring the cooling performance of the battery module 100 more stably. Also, in this case, vibration or impact between the distribution unit 400 and the battery module 100 is alleviated by the sealing portion MS, and damage to the connection portion of the battery module 100 or the distribution unit 400 may be prevented.

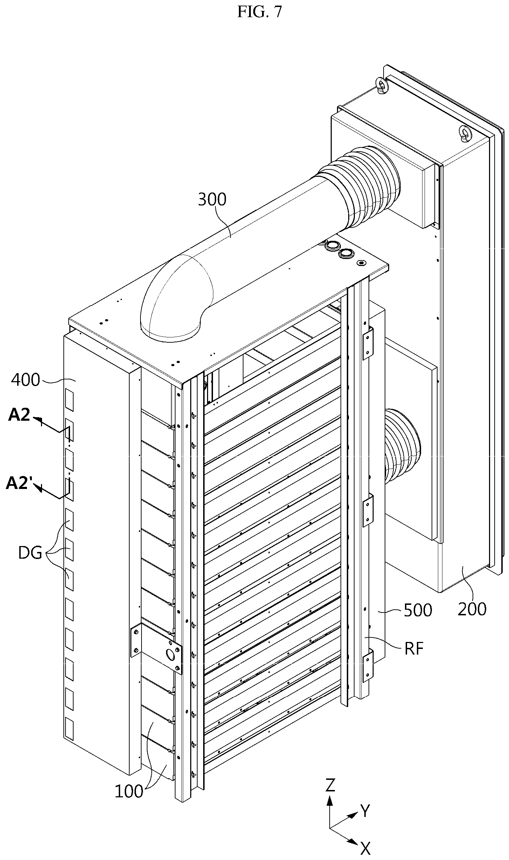

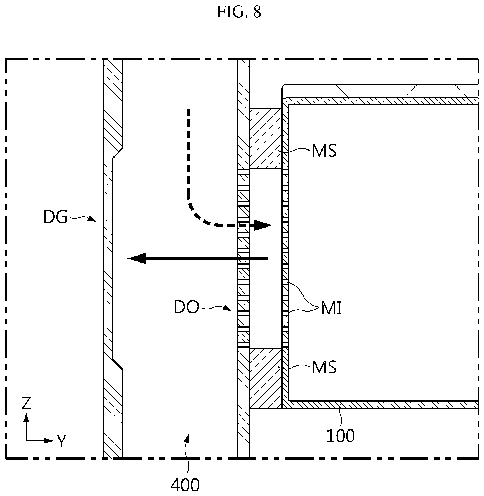

FIG. 7 is a perspective view schematically showing a battery rack according to another embodiment of the present disclosure. FIG. 8 is a cross-sectional view, taken along the line A2-A2' in FIG. 7.

Referring to FIGS. 7 and 8, in the battery rack according to the present disclosure, the distribution unit 400 may include a discharge portion, as indicated by DG. The discharge portion DG may be configured to discharge gas or flame discharged from the battery module 100 to the outside at the distribution unit 400.

In an emergency situation such as thermal runaway of the battery module 100, gas or flame may be generated from the inside of the battery module 100. At this time, if the gas or flame is not properly discharged, an explosion may occur due to the increase in internal pressure of the battery module 100, and heat or fire may rapidly spread to other adjacent battery modules 100. However, according to this embodiment, when gas or fire occurs from the battery module 100, the gas or fire may be properly discharged to the outside.

In particular, since a plurality of battery modules 100 may be coupled to the distribution unit 400, a plurality of discharge portions DG may also be included in one distribution unit 400. For example, as shown in FIG. 7, in one battery rack, when a plurality of battery modules 100 are stacked in the upper and lower direction, the discharge portion DG of the distribution unit 400 may also be formed in plurality in the upper and lower direction. Moreover, the discharge portion DG may be provided to have a one-to-one correspondence with each battery module 100. As a more specific example, when twelve battery modules 100 are stacked in the upper and lower direction in one battery rack, twelve discharge portions DG formed in the upper and lower direction may be provided in one distribution unit 400.

The discharge portion DG may be configured to discharge gas or flame discharged from each battery module 100 from the inside of the distribution unit 400 to the outside. For example, the discharge portion DG may be formed to communicate with the module input hole MI and the distribution output hole DO, as shown in FIG. 8. To this end, the discharge portion DG may be formed at the same location as the module input hole MI and the distribution output hole DO in the horizontal direction (X-axis direction) as well as the upper and lower direction (Z-axis direction).

According to this embodiment of the present disclosure, in an emergency situation such as thermal runaway, explosion or fire of the battery module 100 may be more effectively prevented by quickly discharging flame or gas to the outside. Also, according to this embodiment, by controlling the venting direction for the plurality of battery modules 100, it is possible to prevent gases or flames of the battery modules 100 from influencing each other. Moreover, since flame or the like has a strong tendency to travel in a straight line, if the discharge portion DG is formed in line with the module input hole MI and the distribution output hole DO and is configured to open when pressure or heat is applied in the horizontal direction as in this embodiment, the flame discharge performance may be further improved.

The discharge portion DG may be configured to open when pressure or heat of a certain level or above is applied. In particular, when the battery rack or the battery module 100 included therein operates normally, the discharge portion DG is maintained in a closed state, but when an emergency situation such as thermal runaway occurs in a specific battery module 100, the corresponding discharge portion DG may be switched to an open state.

For example, the discharge portion DG may be formed at the outer plate of the distribution unit 400, as shown in FIG. 8. At this time, the discharge portion DG may be configured to be thinner than other portions. As a more specific example, the distribution unit 400 may be formed to have a thickness of approximately 1 mm, but only the portion where the discharge portion DG is formed may be configured to have a thickness of 0.5 mm.

In this embodiment, in a normal state, the cooling gas existing in the inner space of the distribution unit 400 may flow into the inner space of the battery module 100 via the distribution output hole DO and the module input hole MI sequentially, as indicated by the dotted arrow. At this time, the discharge portion DG may remain blocked. However, in an abnormal situation, such as a thermal runaway situation of the battery module 100, gas or flame generated in the battery module 100 may be directed to the discharge portion DG of the distribution unit 400 via the module input hole MI and the distribution output hole DO sequentially, as indicated by the solid arrow in FIG. 8. At this time, the discharge portion DG of the distribution unit 400 may be formed to have a thin thickness, and may be thermally deformed, damaged, or melted before other portions due to high temperature and high pressure venting gas and flame.

According to this embodiment, since the discharge portion DG is blocked in a normal state, the distribution unit 400 may faithfully perform its role of distributing the cooling gas and may prevent loss of the cooling gas. Also, in a normal state, it is possible to prevent external foreign substances from penetrating into the distribution unit 400 and the inner space of the battery module 100 through the discharge portion DG.

Moreover, according to this embodiment, the propagation of a thermal runaway state between the battery modules 100 may be more effectively prevented. In particular, gas or flame discharged from the battery module 100 in an abnormal state opens the corresponding discharge portion DG, while the discharge portion DG corresponding to another normal battery module 100 may remain closed. Accordingly, it is possible to prevent the gas or flame discharged to the outside of the distribution unit 400 through a specific discharge portion DG from being directed to other battery modules 100 through another discharge portion DG from the outside of the distribution unit 400. Moreover, a sufficient space may not be formed in the space where the battery rack is located, especially at the rear of the battery rack. At this time, the high-temperature gas or flame discharged through a specific discharge portion DG may flow upward or downward along the outer surface of the distribution unit 400. At this time, since the other discharge portion DG is maintained in a closed state, the problem of reverse inflow of gas or flame into other battery modules 100 may be effectively prevented.

As shown in FIG. 8, the discharge portion DG may be formed on the inner surface of a plate located at an outer side, among two plates defining the internal flow path of the distribution unit 400. In particular, the discharge portion DG may be formed in the shape of a groove concave outward at the inner surface of the outer plate of the distribution unit 400.

According to this embodiment, as indicated by the solid arrow in FIG. 8, when gas or flame is directed to the discharge portion DG, the gas or flame may be concentrated in the concave portion. Therefore, it is possible to ensure that the discharge portion DG is damaged more quickly and smoothly. In addition, according to this embodiment, it is possible to reduce the gas or flame flowing into a specific discharge portion DG from being directed to another discharge portion DG.

As shown in FIG. 8, the discharge portion DG is formed in an integrated form with other portions of the distribution unit 400, but may be configured to have a different thickness only. For example, the distribution unit 400 may be made of or include polycarbonate (PC) or acrylonitrile butadiene styrene (ABS). Alternatively, the distribution unit 400 may be configured such that the discharge portion DG is made of a material different from other portions. Moreover, the discharge portion DG may be made of a material with a lower melting point or strength compared to other portions of the distribution unit 400.

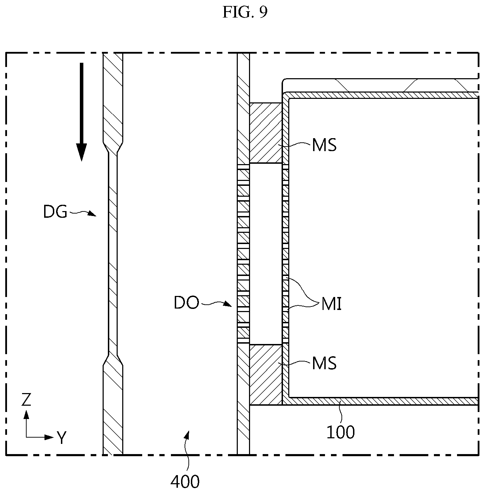

FIG. 9 is an enlarged cross-sectional view schematically showing some components of the distribution unit 400 included in a battery rack according to still another embodiment of the present disclosure. For example, FIG. 9 may be a modified example of the cross-sectional configuration taken along line A2-A2' in FIG. 7.

Referring to FIG. 9, in the distribution unit 400, the discharge portion DG may be formed to be concave inward at the outer surface. In addition, the discharge portion DG is configured to have a thin thickness through the concave shape formed at the outer surface, and thus may be opened more quickly by heat or pressure applied from the inside.

Moreover, according to this embodiment, it is possible to prevent other discharge portions DG from being damaged by the flame or gas that is discharged from a specific discharge portion DG and flows along the outer surface of the distribution unit 400. For example, when gas or flame is discharged from a specific discharge portion DG, the flame or the like may flow along the outer surface of the distribution unit 400, as indicated by an arrow in FIG. 9. At this time, since other discharge portions DG are recessed inward at the outer surface of the distribution unit 400, it is possible to reduce the influence of the flame or the like that have strong straightness. Therefore, in this case, the influence of flame or gas between battery modules 100 may be further reduced.

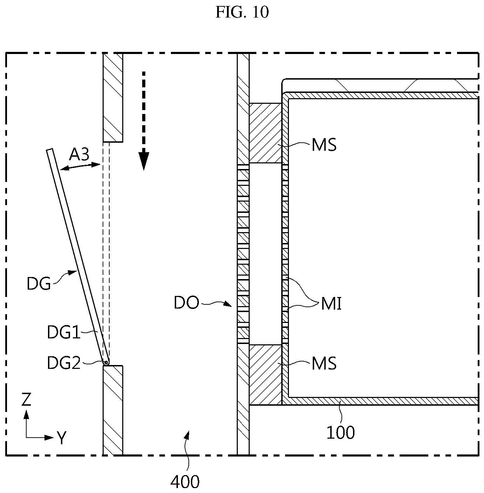

FIG. 10 is an enlarged cross-sectional view schematically showing some components of the distribution unit 400 included in a battery rack according to still another embodiment of the present disclosure. For example, FIG. 10 may be a modified example of the cross-sectional configuration taken along line A2-A2' in FIG. 7.

Referring to FIG. 10, the discharge portion DG may be configured to be opened and closed by pivoting based on a hinge. For example, in the discharge portion DG, a discharge cover as indicated by DG1 may be coupled to a hinge indicated by DG2. In this case, the discharge portion DG may be opened or closed through a hinge pivoting configuration as indicated by arrow A3. Moreover, the hinge DG2 may be configured to include an elastic body such as a spring to maintain a closed state. Therefore, in a normal state, the discharge portion DG remains closed, but in an abnormal state, if pressure is applied from the inside by gas, flame, or the like to reach a level exceeding the elastic force of the elastic body, the discharge cover DG1 may rotate to close the discharge portion DG.

According to this embodiment of the present disclosure, the discharge portion DG may be opened only in abnormal situations, and the closed state may be maintained more stably in a normal state. Therefore, the problem of the discharge portion DG being opened due to a cooling gas or the like in a normal state may be suppressed.

In particular, in the discharge portion DG, the hinge DG2 may be located at the lower portion of the discharge cover DG1, as shown in FIG. 10. That is, the discharge cover DG1 may be pivoted based on the hinge with the lower portion being fixed. According to this embodiment of the present disclosure, it is possible to more reliably prevent the discharge portion DG from being opened by the cooling gas. That is, in the hollow of the distribution unit 400, the cooling gas may flow downward, as indicated by the dotted arrow. Therefore, in a state where the lower end of the discharge cover DG1 is hinged as in this embodiment, the discharge cover DG1 may not be easily opened due to the flow of the cooling gas. Therefore, in a normal state, the cooling gas is stably held in the inner space of the distribution unit 400, and external leakage of the cooling gas through the discharge portion DG may be prevented.

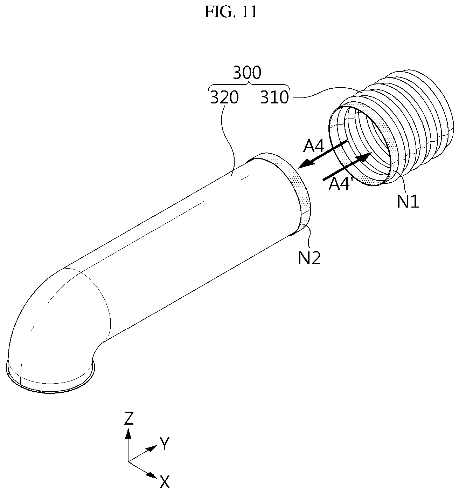

FIG. 11 is an exploded perspective view schematically showing an inlet duct unit 300 according to an embodiment of the present disclosure.

Referring to FIG. 11, the inlet duct unit 300 may include two or more unit inlet ducts. Each unit inlet duct may have a hollow to guide the cooling gas. Also, the plurality of unit inlet ducts may be configured to be detachably attached to each other.

More specifically, the inlet duct unit 300 may include a first inlet duct 310 and a second inlet duct 320. Also, the two unit inlet ducts may be coupled to each other or separated from each other in the front and rear direction (Y-axis direction), along which the cooling gas flows, in the inlet duct unit 300, as indicated by arrows in FIG. 11. At this time, the first inlet duct 310 may be coupled to the supply unit 200, and the second inlet duct 320 may be coupled to the distribution unit 400. For example, the first inlet duct 310 and the second inlet duct 320 may be formed to be elongated long in the front and rear direction. Also, the front end of the first inlet duct 310 may be coupled to the supply unit 200, and the rear end of the first inlet duct 310 may be detachably coupled to the front end of the second inlet duct 320. Also, the rear end of the second inlet duct 320 may be coupled to the distribution unit 400. At this time, the fan described above may be provided at the rear end of the second inlet duct 320.

The first inlet duct 310 and the second inlet duct 320 may be moved and coupled to each other as indicated by arrow A4. At this time, the hollows of the first inlet duct 310 and the second inlet duct 320 may be communicated with each other. In addition, the coupling portion between the first inlet duct 310 and the second inlet duct 320 may be sealed, so that the cooling gas flowing along the hollow of the first inlet duct 310 may flow along the hollow of the second inlet duct 320 without leaking to the outside through the coupling portion. Meanwhile, the first inlet duct 310 and the second inlet duct 320 may be separated from each other by moving as indicated by arrow A4'.

According to this embodiment, as the location of the supply unit 200 changes, two or more unit inlet ducts may be adaptively separated or attached. For example, the battery rack according to the present disclosure is included in the battery container, and in this case, the supply unit 200 may be mounted to a door of the container housing included in the battery container. In this embodiment, when the door is closed, the two or more unit inlet ducts may be coupled to each other, and when the door is opened, the two or more unit inlet ducts may be separated from each other. Therefore, in a state where the supply unit 200 is installed at the door or the like, the door may be opened and closed stably.

In this embodiment, at least one of the two or more unit inlet ducts may include a corrugated pipe. For example, as shown in FIG. 11, at least a part of the first inlet duct 310 may be configured in the form of a corrugated pipe. Here, the corrugated pipe may be expressed using a term such as Javara hose. In particular, the corrugated pipe may be configured to have flexibility in the longitudinal direction and/or in a direction perpendicular thereto. That is, at least a part of the unit inlet duct may be configured to change length or have a curved shape.

According to this embodiment of the present disclosure, the inlet duct unit 300 may be modified into various forms appropriate for the structure of the battery rack itself or the structure of the space where the battery rack is installed. Therefore, the battery rack may be manufactured or installed easily. Also, according to this embodiment, damage may be prevented and sealing force may be stably secured due to the flexibility of the unit inlet duct even when the supply unit 200 moves. Moreover, when the supply unit 200 is installed at the door of the container housing, the damage prevention performance or the sealing force of the unit inlet duct may be secured more stably during the process of opening and closing the door.

The two or more unit inlet ducts may be configured to be detachable by magnetic force. For example, in this embodiment, the first inlet duct 310 and the second inlet duct 320 may be configured to be coupled to each other by magnetic force. To this end, at least one of the first inlet duct 310 and the second inlet duct 320 may have a material that generates a magnetic field. In particular, one of the first inlet duct 310 and the second inlet duct 320 may have a magnet. Also, the remaining one may have a magnetic material that can be attracted by a magnet. Alternatively, the first inlet duct 310 and the second inlet duct 320 may be configured so that magnetic materials with different polarities face each other. As a more specific example, as indicated by N1 and N2 in FIG. 11, magnets or magnetic materials may be provided at the opposite ends of the first inlet duct 310 and the second inlet duct 320, so that they attract each other when approaching within a certain distance.

In particular, the magnet or magnetic material on which magnetic force acts may be formed in a ring shape. For example, the magnet or magnetic material may be configured in the form of O-rings at opposing ends of different unit inlet ducts. In this case, the cooling gas may be delivered through the hollow of the O-ring. Also, the magnets or magnetic materials that are coupled to each other may be configured to enable insertion and coupling.

According to this embodiment of the present disclosure, the unit inlet ducts may be attached and detached easily. In particular, when the supply unit 200 is mounted to the door and its position is moved, the unit inlet ducts may be easily coupled or separated. Also, in this embodiment, the sealing force between the unit inlet ducts may be secured more stably.

The battery rack according to the present disclosure may further include an outlet duct unit 500, as shown in FIG. 1 and the like.

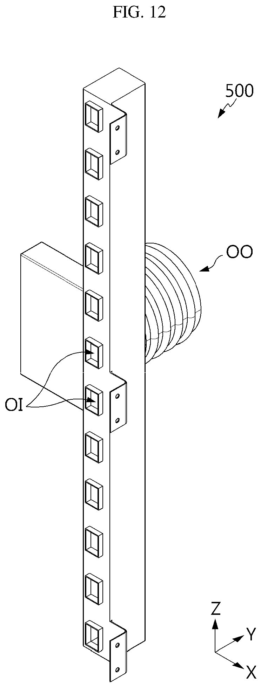

The outlet duct unit 500 may be configured to deliver the cooling gas discharged from the plurality of battery modules 100 to the supply unit 200. This will be described in more detail with further reference to FIG. 12.

FIG. 12 is a perspective view schematically showing an outlet duct unit 500 included in the battery rack according to an embodiment of the present disclosure.

Referring to FIG. 12, the outlet duct unit 500 is formed to be elongated in the upper and lower direction, along which the plurality of battery modules 100 are stacked, and a hollow may be formed therein. Also, inside the outlet duct unit 500, as indicated by OI, a duct input hole may be formed to face the plurality of battery modules 100. Therefore, the cooling gas that absorbs heat while passing through the plurality of battery modules 100 may flow into the hollow inside the outlet duct unit 500 through the duct input hole OI. Moreover, the duct input hole OI may be provided to correspond to each battery module 100. In particular, the duct input hole OI may be provided to correspond to the plurality of battery modules 100 in one-to-one relationship. Accordingly, the cooling gas that absorbs heat from each battery module 100 may be collected into the outlet duct unit 500.

In addition, in the outlet duct unit 500, a duct output hole may be formed, as indicated by OO. In the outlet duct unit 500, the duct output hole OO may be formed at a side different from the duct input hole OI, for example at a surface opposite to the duct input hole OI. The duct output hole OO is a configuration for discharging the cooling gas collected from each battery module 100 to the outside, and it is not needed to provide the duct output hole OO in a large number, different from the duct input holes OI. For example, only one duct output hole OO may be provided in the outlet duct unit 500. Moreover, the duct output hole OO may be coupled to the supply unit 200 and configured to collect the cooling gas discharged from the battery module 100 and deliver the cooling gas to the supply unit 200. In this case, the supply unit 200 may take heat from the received cooling gas, lower the temperature of the cooling gas, and then supply the cooling gas again to the inlet duct unit 300.

According to this embodiment of the present disclosure, the cooling efficiency of the battery rack may be further improved. In particular, according to this embodiment, the cooling gas whose temperature has increased by absorbing heat from the battery module 100 may be directly transferred to the supply unit 200. Therefore, the problem that the cooling gas is not properly cooled in the inner space of the battery rack as moving toward parts other than the supply unit 200 may be reduced. Therefore, the cooling efficiency may be further improved. Also, in this case, since the cooling gas is continuously supplied to the battery module 100 by circulating air around the battery rack, external air may not be introduced. Therefore, the problem that foreign substances are introduced to the periphery of the battery rack may be more reliably prevented.

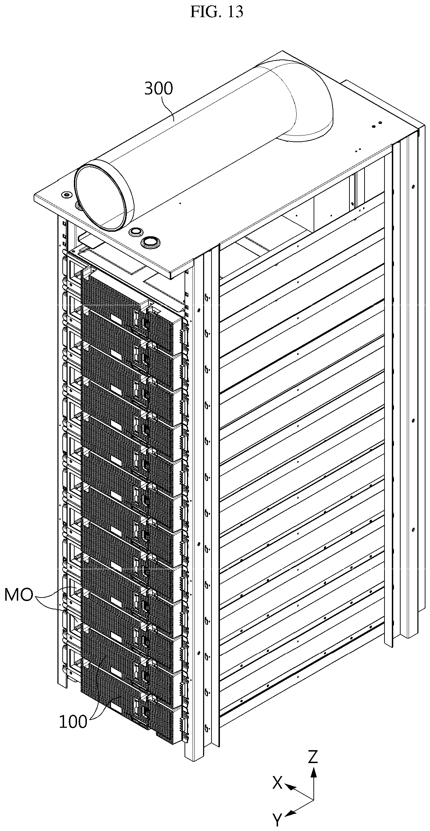

FIG. 13 is a perspective view schematically showing some components of the battery rack according to an embodiment of the present disclosure. In particular, FIG. 13 may be regarded as a diagram showing the stack of the battery modules 100 from which the outlet duct unit 500 is removed.

Referring to FIG. 13, each battery module 100 may have a module output hole MO. The module output hole MO may be formed to penetrate between the inner space of the battery module 100 and the outer space. Moreover, in the battery module 100, the module input hole MI may be formed as shown in FIG. 5. In this case, the cooling gas that flows into the inner space of the battery module 100 through the module input hole MI may be discharged to the outside through the module output hole MO while flowing between the battery cells accommodated inside the battery module 100.

In particular, the module input hole MI and the module output hole MO may be located on opposite sides in the front and rear direction. For example, the module input hole MI may be located at the rear side of the battery module 100, and the module output hole MO may be located at the front side of the battery module 100. Moreover, the module input hole MI and the module output hole MO may be located on opposite sides in the left and right direction. For example, the module input hole MI may be located at the right side in the rear surface of the battery module 100, and the module output hole MO may be located at the left side in the front surface of the battery module 100.

According to the above embodiment, the battery cells accommodated inside each battery module 100 may be sufficiently cooled. In particular, in this case, the cooling gas may flow while contacting the largest possible surface area for the entire battery cell. Accordingly, the cooling performance for the inside of the battery module 100 may be further improved.

In the embodiment, the outlet duct unit 500 may be coupled to the module output hole MO provided in each battery module 100. In particular, the duct input hole OI of the outlet duct unit 500 may be connected to the module output hole MO of each battery module 100 in an accommodated state. At this time, a ring-shaped sealing member may be provided around the module output hole MO to stably secure the sealing force between the duct input hole OI of the outlet duct unit 500 and the module output hole MO of the battery module 100.

In addition, the duct input hole OI of the outlet duct unit 500 may be configured to be inserted into and coupled to the battery module 100. In particular, the duct input hole OI may be configured to be fitted into the module output hole MO of the battery module 100. To this end, at least a part of the duct input hole OI may be configured to protrude toward the battery module 100. For example, as shown in FIG. 12, the duct input hole OI may have a protrusion protruding in the shape of a rectangular ring in the inner direction (-Y-axis direction).

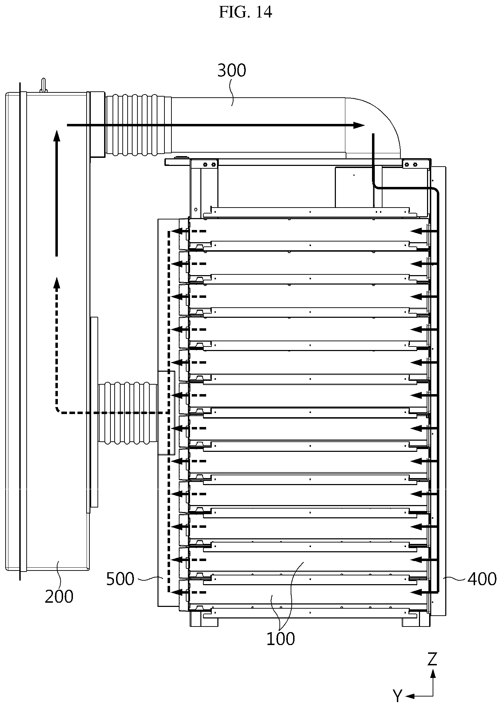

FIG. 14 is a diagram showing the flow of a cooling gas in the battery rack according to an embodiment of the present disclosure. In FIG. 14, the flow of a cooling gas is indicated by an arrow.

Referring to FIG. 14, the cooling gas supplied from the supply unit 200 may be delivered to the distribution unit 400 via the inlet duct unit 300 located at the upper portion, as indicated by a solid arrow. Also, the cooling gas may flow into the inside of each battery module 100 through the distribution unit 400, flow through the inner space of the battery module 100, and then flow out to the outlet duct unit 500, as indicated by a dotted arrow. Then, the outlet duct unit 500 may collect the cooling gas flowing out of each battery module 100 and deliver the cooling gas to the supply unit 200. Also, the supply unit 200 may cool the cooling gas delivered from the outlet duct unit 500 and supply the cooling gas again to the inlet duct unit 300.

According to this embodiment, the cooling medium that cools the battery module 100 may be used in a recirculated form. Therefore, there is no need to supply a separate cooling medium from the outside. In particular, when the battery rack is located in a closed space such as the container housing, the battery rack may be cooled by using only the air inside the container housing. Therefore, the effect of suppressing the inflow of external foreign substances or waterproofing the container housing may be secured more reliably. Also, according to this embodiment, since the cooling gas is entirely used to cool the battery module 100, there is no waste of the cooling gas, and the cooling gas may be used more efficiently.

In addition, according to this embodiment, a large space for cooling may not be secured around the battery rack inside the container housing. That is, the cooling gas may be reliably delivered to the battery module 100 by providing the inlet duct unit 300, the distribution unit 400, and the outlet duct unit 500 even in a narrow space. Therefore, the volume of the battery rack or the battery container containing the battery rack may be reduced, and the energy density may be improved.

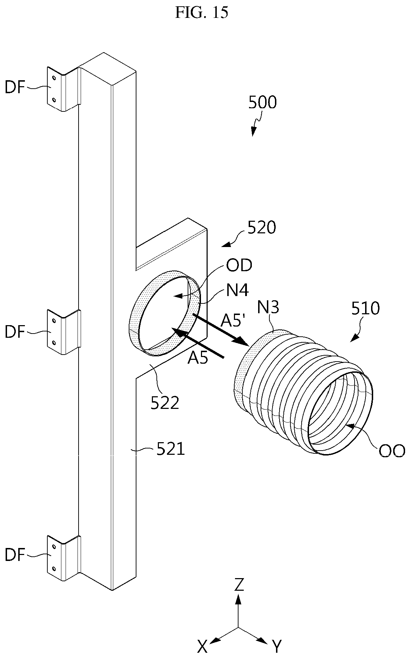

FIG. 15 is an exploded perspective view showing the outlet duct unit 500 according to an embodiment of the present disclosure.

Referring to FIG. 15, the outlet duct unit 500 may include two or more unit outlet ducts. Also, the two or more unit outlet ducts may be configured to be detachably attached to each other. For example, the outlet duct unit 500 may include a first outlet duct 510 and a second outlet duct 520. Each of the first outlet duct 510 and the second outlet duct 520 may be configured to have a hollow so that the cooling gas flows therein. In addition, the hollows of the unit outlet ducts may communicate with each other so that the cooling gas may be transferred to each other.

In particular, the front end of the first outlet duct 510 may be connected to the supply unit 200. Moreover, a duct output hole OO may be formed at the front end of the first outlet duct 510 and communicatively connected to the supply unit 200. Also, the rear end of the first outlet duct 510 may be connected to the front end of the second outlet duct 520. Also, the rear end of the second outlet duct 520 may be coupled to the battery module 100. In particular, a duct input hole OI may formed at the rear side of the second outlet duct 520 and communicatively connected to the module output hole MO of the battery module 100.

The second outlet duct 520 of the outlet duct unit 500 may be fastened to a rack frame RF or the like to be stably coupled with the module output hole MO. In particular, the second outlet duct 520 has a portion elongated in the upper and lower direction, and a plurality of fastening portions with the rack frame RF may be provided in the upper and lower direction. For example, the second outlet duct 520 may have a plurality of fastening portions for fastening with the rack frame RF to be arranged in the upper and lower direction, as indicated by DF in FIG. 15.

In this embodiment, the rear end of the first outlet duct 510 and the front end of the second outlet duct 520 may be configured to be detachably attached to each other. For example, the rear end of the first outlet duct 510 may be moved as indicated by arrow A5 and coupled to the front end of the second outlet duct 520. In this case, the rear end of the first outlet duct 510 and the front end of the second outlet duct 520 may be sealed with each other in a state where the hollows are communicated. Also, the rear end of the first outlet duct 510 may be separated from the second outlet duct 520 by moving as indicated by arrow A5'.

According to this embodiment of the present disclosure, when the position of the supply unit 200 changes, damage to the outlet duct unit 500 may be prevented and the sealing force may be stably secured due to the detachable configuration between the unit outlet ducts. Moreover, when the supply unit 200 is mounted to the door or the like, the door may be easily opened and closed. For example, when the door at which the supply unit 200 is installed is opened, the unit outlet ducts may be separated from each other, and when the door is closed, the unit outlet ducts may be coupled with each other.

In this embodiment, at least one of the two or more unit outlet ducts may include a corrugated pipe. For example, as shown in the embodiments of FIG. 15 or the like, the first outlet duct 510 may include a corrugated pipe. In this case, the first outlet duct 510 may secure length in the front and rear direction and/or flexibility in the upper and lower or left and right direction. Accordingly, the movement of the supply unit 200 may be stably ensured, and damage to the outlet duct unit 500 may be prevented. Also, in this case, it may be advantageous to maintain the sealing force of the outlet duct unit 500.

In addition, in this embodiment, two or more unit outlet ducts may be configured to be detachable by magnetic force. For example, as indicated by N3 and N4 in FIG. 15, portions where the first outlet duct 510 and the second outlet duct 520 are coupled to each other may have portions that are coupled to each other by magnetic force. In particular, the portions that are coupled to each other by magnetic force may have a material that generates a magnetic field, such as a magnet, or a ferromagnetic material that generates attractive force by a magnet. In particular, the magnet or the magnetic material may be formed in a ring shape surrounding the opening of the hollow in each unit outlet duct. Also, the coupled portions of the first outlet duct 510 and the second outlet duct 520, particularly the magnets or magnetic materials, may be configured to be fitted and coupled to each other.

According to this embodiment of the present disclosure, a detachable configuration between two or more unit outlet ducts may be more easily implemented. Also, according to this embodiment, the sealing force may be secured more stably in the opening of the hollows coupled to each other.

In addition, in this embodiment, the second outlet duct 520 may include a module coupling portion 521 and a duct coupling portion 522. Here, the module coupling portion 521 may be a portion of the second outlet duct 520 configured to be coupled to the battery module 100. Accordingly, the module coupling portion 521 may be elongated in the upper and lower direction so that a hollow may be formed therein, and a plurality of duct input holes OI may be formed at the rear side to be arranged in the upper and lower direction. Also, the duct coupling portion 522 may be configured as a portion whose hollow is connected to the module coupling portion 521 and which is coupled to the first outlet duct 510. Moreover, the duct coupling portion 522 may have an opening formed at the front side, as indicated by OD, so that the hollow communicates with the first outlet duct 510. Also, around this opening OD, a ring-shaped magnet or magnetic material may be provided. At this time, the first outlet duct 510 may be coupled to the duct coupling portion 522 of the second outlet duct 520 through a ring-shaped magnet or the like.

In particular, the duct coupling portion 522 may be provided at the left or right side of the module coupling portion 521, rather than the front side. For example, seeing the embodiment of FIG. 15, the duct coupling portion 522 may be located at the right end of the module coupling portion 521. That is, the duct coupling portion 522 may be coupled to the module coupling portion 521 at the front side of the battery module 100 in the upper and lower or left and right direction, rather than in the front and rear direction.

According to this embodiment of the present disclosure, in the second outlet duct 520, both the portion that collects the cooling gas from the plurality of battery modules 100 and the coupled portion of the first outlet duct 510 may be placed close to the battery module 100. Accordingly, the size of the outlet duct unit 500 in the front and rear direction may be reduced. Therefore, in this case, the energy density of the battery rack may be further improved due to efficient space utilization.

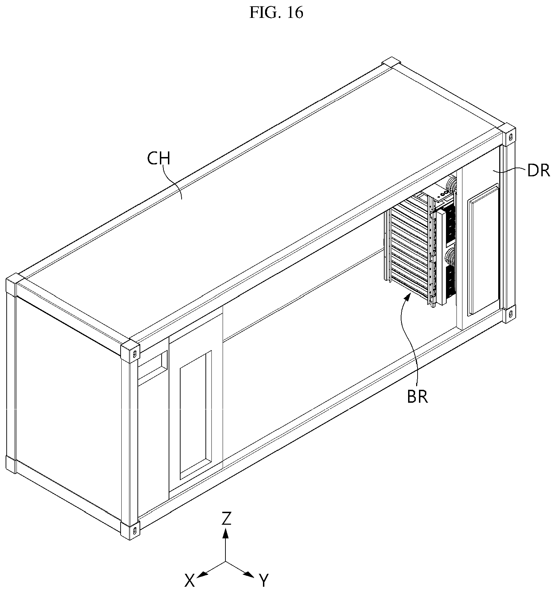

FIG. 16 is a perspective view schematically showing a battery container according to an embodiment of the present disclosure.

Referring to FIG. 16, the battery container according to the present disclosure may include a battery rack BR according to the present disclosure. In particular, even though only one battery rack BR is shown in FIG. 16, the battery container may include a plurality of battery racks BR. In this case, the plurality of battery racks BR may be connected to each other in series and/or parallel.

In addition, the battery container according to the present disclosure may include a container housing CH for accommodating the battery rack BR in the inner space. Here, the container housing CH may be made of a material such as steel to stably protect the battery rack BR accommodated inside and maintain structural rigidity. Moreover, a door DR may be provided on at least one side of the container housing CH. The door DR may be configured to be open and closed to control access to or closure of the inner space of container housing CH. In particular, as described above, the supply unit 200 of the battery rack BR according to the present disclosure may be installed at the door DR.

In addition, the battery container according to the present disclosure may adopt various components of various battery containers known at the time of filing of this application. For example, the battery container according to the present disclosure may further include a control unit that controls charging and discharging operations of the battery rack BR.

In addition, an energy storage system (ESS) according to the present disclosure may include a plurality of battery racks according to the present disclosure. Also, the energy storage system according to the present disclosure may include one or more battery containers according to the present disclosure. In particular, in order to have a large energy capacity, the energy storage system may include a plurality of battery racks or battery containers according to the present disclosure to be electrically connected to each other.

In addition, the energy storage system according to the present disclosure may further include various other components of the energy storage system known at the time of filing of this application. For example, the energy storage system according to the present disclosure includes not only a plurality of battery containers including a plurality of battery racks according to the present disclosure, but also a control container that controls charging and discharging or temperature for the plurality of battery containers.

The energy storage system according to the present disclosure may be applied to various places or devices for storing power and supplying the stored power, such as smart grid systems, electric charging stations, solar photovoltaic systems, and solar power systems.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

100: battery module
200: supply unit
300: inlet duct unit
310: first inlet duct, 320: second inlet duct
400: distribution unit
500: outlet duct unit
510: first outlet duct, 520: second outlet duct
521: module coupling portion, 522: duct coupling portion
RF: rack frame
DI: distribution input hole
DO: distribution output hole
MI: module input hole
MO: module output hole
O: hole
MS: sealing portion
DG: discharge portion
DG1: discharge cover, DG2: hinge
OI: duct input hole
OO: duct output hole
BR: battery rack
CH: container housing
DR: door

## Claims

1. A battery rack, comprising:
a plurality of battery modules stacked in at least one direction;
a supply unit configured to supply a cooling gas;
an inlet duct unit having one end connected to the supply unit and configured to guide the flow of the cooling gas supplied by the supply unit; and
a distribution unit connected to the other end of the inlet duct unit and configured to distribute the cooling gas guided by the inlet duct unit to each of the plurality of battery modules.

2. The battery rack according to claim 1,
wherein the inlet duct unit has a fan.

3. The battery rack according to claim 1,
wherein the inlet duct unit is located at an upper portion of the plurality of battery modules.

4. The battery rack according to claim 1,
wherein the distribution unit has a plurality of distribution output holes formed to respectively correspond to the plurality of battery modules.

5. The battery rack according to claim 4,
wherein at least some of the plurality of distribution output holes are configured to have different aperture ratios.

6. The battery rack according to claim 1,
wherein the plurality of battery modules have a module input hole formed to allow the cooling gas to flow into an inner space.

7. The battery rack according to claim 1,
wherein the distribution unit has a discharge portion configured to discharge gas or flame discharged from the plurality of battery modules to the outside.

8. The battery rack according to claim 7,
wherein the discharge portion is configured to be opened when a pressure of a predetermined level or above is applied.

9. The battery rack according to claim 1,
wherein the inlet duct unit includes two or more unit inlet ducts configured to be detachably attached to each other.

10. The battery pack according to claim 9,
wherein at least one of the two or more unit inlet ducts includes a corrugated pipe.

11. The battery pack according to claim 9,
wherein the two or more unit inlet ducts are configured to be detachable by a magnetic force.

12. The battery rack according to claim 1, further comprising:
an outlet duct unit configured to deliver a cooling gas discharged from the plurality of battery modules to the supply unit.

13. The battery rack according to claim 12,
wherein the outlet duct unit includes two or more unit outlet ducts configured to be detachably attached to each other.

14. A battery container, comprising the battery rack according to any one of claims 1 to 13.

15. An energy storage system, comprising the battery rack according to any one of claims 1 to 13.
